**Europäisches Patentamt**

**European Patent Office**

**Office européen des brevets**

(19)

(11) Veröffentlichungsnummer : **0 343 347 B1**

(12)

# EUROPÄISCHE PATENTSCHRIFT

(45) Veröffentlichungstag der Patentschrift :
06.05.92 Patentblatt 92/19

(51) Int. Cl.$^5$ : **B23B 29/32**

(21) Anmeldenummer : **89105597.2**

(22) Anmeldetag : **30.03.89**

(54) **Werkzeugrevolver.**

(30) Priorität : **26.05.88 DE 3817893**

(43) Veröffentlichungstag der Anmeldung :
**29.11.89 Patentblatt 89/48**

(45) Bekanntmachung des Hinweises auf die
Patenterteilung :
**06.05.92 Patentblatt 92/19**

(84) Benannte Vertragsstaaten :
**ES FR GB IT**

(56) Entgegenhaltungen :
**DD-A- 132 244**
**DE-A- 3 111 569**
**DE-A- 3 134 969**
**DE-A- 3 311 105**
**US-A- 3 618 427**

(73) Patentinhaber : **Sauter Feinmechanik GmbH**
**Postfach 15 51**
**W-7430 Metzingen (DE)**

(72) Erfinder : **Sauter, Willy**
**Berggasse 91**
**W-7410 Reutlingen (DE)**
Erfinder : **Thumm, Helmut, Dipl.-Ing.(FH)**
**Steinerweg 37**
**W-7430 Metzingen (DE)**
Erfinder : **Schips, Günther**
**Schillerstrasse 26**
**W-7430 Metzingen (DE)**
Erfinder : **Müller, Alfred E., Dipl.-Ing.**
**Heerstrasse 47**
**W-7430 Metzingen (DE)**

(74) Vertreter : **Patentanwälte Phys. Bartels**
**Dipl.-Ing. Fink Dr.-Ing. Held**
**Lange Strasse 51**
**W-7000 Stuttgart 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Werkzeugrevolver, der die Merkmale des Oberbegriffes des Anspruches 1 aufweist.

Bei den bekannten Werkzeugrevolvern dieser Art (US-A-3 618 427) ist die Druckfeder, welche den Verriegelungsteil in dessen Verriegelungsstellung gegen die Zahnkränze des Revolverkopfs und des Gehäuses drückt, so dimensioniert, daß auf keinen Fall eine am Revolverkopf angreifende Belastung dazu führen kann, daß dessen Verriegelung sich lösen kann. Eine Lösung der Verriegelung ist nur dann möglich, wenn der .Steuerkörper in eine Freigabestellung gebracht wird. Bei den bekannten Werkzeugrevolvern haben deshalb Kollisionen, bei denen auf den Revolverkopf ein hohes Drehmoment ausgeübt wird, immer wieder eine Beschädigung oder eine Zerstörung von Teilen des Werkzeugrevolvers zur Folge.

Da solche Schäden nicht nur Reparaturkosten, sondern auch Produktionsausfälle zur Folge haben, liegt der Erfindung die Aufgabe zugrunde, einen Werkzeugrevolver zu schaffen, der in einem Kollisionsfalle keinen Schaden erleidet. Diese Aufgabe löst ein Werkzeugrevolver mit den Merkmalen des Anspruches 1.

Dadurch, daß beim Überschreiten einer oberen Grenze des auf den Revolverkopf ausgeübten Drehmomentes, die in einem ausreichend großen Abstand sowohl von den bei störungsfreiem Betrieb auftretenden Belastungen als auch von denienigen Werten liegt, bei denen mit Beschädigungen oder Zerstörungen von Teilen des Werkzeugrevolvers gerechnet werden muß, zumindest der eine der beiden Zahnkränze und die Verzahnung des Verriegelungsteils außer Eingriff kommen kommt es in einem Kollisionsfall allenfalls dazu, daß die Verriegelung des Revolverkopfes zwangsweise gelöst wird und der Revolverkopf sich relativ zum Gehäuse verdreht. Irgendwelche Beschädigungen von Teilen des Werkzeugrevolvers treten dabei nicht auf. Der Revolverkopf braucht deshalb nach einem solchen Kollisionsfall nur wieder in seine Ausgangsstellung gedreht zu werden.

Damit bei einer Verdrehung des Revolverkopfes relativ zum Verriegelungsteil keine Teildemontage notwendig ist, um ihn wieder in die Ausgangslage bezüglich des Verriegelungsteiles zu drehen, ist die Verdrehsicherung vorgesehen, welche zwar die Ausrückbewegung des Verriegelungsteils zuläßt, jedoch den Revolverkopf und das Verriegelungsteil ständig drehfest miteinander verbindet. Ein Verdrehen des Revolverkopfes in Folge einer Kollision führt dann nur zu einer gemeinsamen Verdrehung des Revolverkopfes und des Verriegelungsteils. Der Revolverkopf kann deshalb mit Hilfe des Antriebsmotors und der vom Winkelstellungsgeber erzeugten Signale wieder in diejenige Winkelstellung zurückgedreht werden, in der er sich vor der Kollision befunden hat. Die durch eine Kollision bedingte Produktionsunterbrechung kann hierdurch äußerst gering gehalten werden.

Eine solche Verdrehsicherung kann beispielsweise wenigstens ein Mitnehmerelement gemäß Anspruch 2 aufweisen. Bei einer bevorzugten Ausführungsform ist jedes vorgesehene Mitnehmerelement als Gleitstein ausgebildet, der am revolverkopf festgelegt ist und in einem Führungskanal des Verriegelungsgliedes in der Verschieberichtung desselben verschiebbar geführt ist. Hierdurch ist sichergestellt, daß eine Verdrehung des Revolverkopfes relativ zum Verriegelungsteil auch dann nicht möglich ist, wenn die Verzahnung beider Teile außer Eingriff ist. Selbstverständlich wäre es auch möglich, solche Gleitsteine oder anders ausgebildete Mitnehmerelemente am Verriegelungsteil festzulegen und in Führungskanäle des Revolverkopfes eingreifen zu lassen.

Besonders vorteilhaft ist auch eine Ausbildurg der Verdrehsicherung, bei welcher die Zahnhöhe der Zähne des Zahnkranzes des Revolverkopfes größer ist als die Zahnhöhe der Zähne des Zahnkranzes des Gehäuses. Wenn hier das Verriegelungsteil infolge einer Kollision ausgerückt wird, kommen zunächst die Zähne des Verriegelungsteils außer Eingriff mit den Zähnendes Zahnkranzes des Gehäuses. Daher wird eine Drehung des Revolverkopfes ermöglicht, ohne daß die Zähne von dessen Zahnkranz außer Eingriff mit den Zähnen des Verriegelungsteils kommen. Somit ist auch hier sichergestellt, daß im Kollisionsfalle keine Verdrehung des Revolverkopfes relativ zum Verriegelungsteil auftreten kann.

Im folgenden ist die Erfindung anhand von zwei in der Zeichnung dargestellen Ausführungsbeispielen im einzelnen erläutert. Es zeigen

Fig. 1 einen unvollständig dargestellten Längsschnitt des ersten Ausführungsbeispiels,

Fig. 2 eine unvollständig dargestellte Draufsicht auf die dem Verriegelungsteil zugekehrte Seite des Revolverkopfes des ersten Ausführungsbeispiels,

Fig. 3 eine Seitenansicht des in Fig. 2 dargestellten Mitnehmerelementes sowie je einen Schnitt der dieses Mitnehmerelement umgebenden Materialpartien des Revolverkopfes und des Verriegelungsteils,

Fig. 4 eine vergrößert dargestellte Ansicht je eines Zahnes der Zahnkränze des zweiten Ausführungsbeispiels.

Ein Werkzeugrevolver weist einen Revolverkopf 1 auf, der über das eine Ende eines Gehäuses 2 übersteht, relativ zu dem er in unterschiedliche, genau definierte Winkelstellungen drehbar ist. Am Revolverkopf 1 sind in bekannter Weise mehrere Werkzeughalter befestigbar. Das Gehäuses 2, das an einer nicht dargestellten Werkzeugmaschine festlegbar ist, ist an dem dem Revolverkopf 1 abgekehrten Ende mittels einer nicht dargestellten Trennwand verschlossen, in welcher das eine Ende einer konzentrisch zur Drehachse des Revolverkopfes 1 angeordneten, hohlen Antriebswelle 3 drehbar gelagert ist, mit deren anderem Ende der Revolverkopf 1 fest verschraubt ist. An der dem Gehäuse 2 abgekehrten Seiten der Trennwand liegt dicht eine ebenfalls nicht dargestellte Abdeckhaube an, die zusammen mit der Trennwand einen Raum dicht verschließt, in dem sämtliche elektrische Bauteile des Werkzeugrevolvers einschließlich eines Asynchronmotors angeordnet sind. Die Motorwelle, die parallel zur Antriebswelle 3 liegt, durchdringt die Trennwand, in der sie drehbar gelagert ist, und steht mit ihrem in den Innenraum des Gehäuses 2 ragenden Ende in Getriebeverbindung mit einem Untersetzungsgetriebe, von dem nur die Abtriebswelle 4 mit ihrem Ritzel 4' dargestellt ist.

Das Ritzel 4' kämmt mit einer Außenverzahnung eines Ringes 5, der drehbar auf einem seinerseits drehbar und axial verschieb bar auf der Antriebswelle 3 gelagerten Steuerkörper 6 gelagert ist. Letzterer und der Ring 5 sind mit ineinander greifenden Zähnen versehen, zwischen denen je ein gummielastischer, im Ausführungsbeispiel zylindrischer Dämpfungskörper 7 spielfrei angeordnet ist. Der Ring 5, der Steuerkörper 6 und die Dämpfungskörper 7 bilden deshalb eine elastisch dämpfende Kupplung.

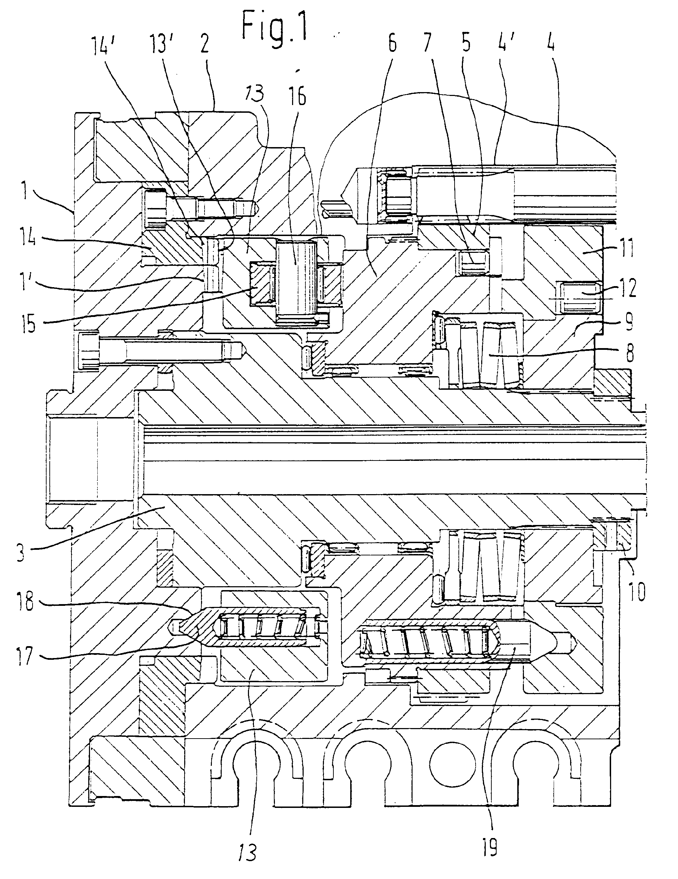

Wie Fig. 1 zeigt, ist der Steuerkörper 6 auf der dem Revolverkopf 1 abgekehrten Stirnseite über ein Lager auf einem Tellerfederpaket 8 abgestützt, welches die Antriebswelle 3 umfaßt und andererseits an einem ringförmigen Innenteil 9 einer zweiten elastisch dämpfenden Kupplung abgestützt ist. Dieser Innenteil 9 ist mittels einer Verzahnung längsverschiebbar, aber undrehbar, auf der Antriebswelle 3 angeordnet und an einem fest mit der Antriebswelle 3 verbundenen Stützring 10 abgestützt.

Den Innenteil 9 der zweiten elastischen Kupplung umgibt ein Außenteil 11, der auf seiner Innenseite Zähne aufweist, welche zwischen Zähne des Innenteils 9 eingreifen. Zwischen diesen Zähnen ist je ein im Ausführungsbeispiel ebenfalls zylindrischer, elastischer Dämpfungskörper 12 spielfrei angeordnet.

Zwischen dem Steuerkörper 6 und dem in das Gehäuse 2 hineinragenden, im Durchmesser verkleinerten Endabschnitt des Revolverkopfes 1 ist auf der Antriebswelle 3 drehbar und axial verschiebbar ein ringförmiges Verriegelungsteil 13 angeordnet, dessen dem Revolverkopf 1 zugewandte Seite mit einer radial verlaufende Zähne aufweisenden Verzahnung 13' versehen ist. Eine korrespondierend ausgebildete Verzahnung 1' ist an der dem Verriegelungsteil 13 zugewandten Stirnfläche des Revolverkopfes 1 vorgesehen. Eine wie die Verzahnung 1' ausgebildete Verzahnung 14' ist an der dem Verriegelungsteil 13 zugewandten Stirnfläche eines Zahnringes 14 ausgebildet, der fest mit dem Gehäuse 2 verbunden ist. Die beiden Verzahnungen 1' und 14' werden gemeinsam geschliffen, da sie zusammen mit der Verzahnung 13 ' des Verriegelungsteiles 13 dazu dienen, den Revolverkopf 1 mit hoher Präzision in den auswählbaren Winkelstellungen zu positionieren, wobei das Tellerfederpakt 8 die Kraft erzeugt, mit welcher in der Verriegelungsstellung des Verriegelungsteils 13 dessen Verzahnung 13' in die Verzahnungen 1' und 14' hineingedrückt wird.

Für die Steuerung der axialen Verschiebung des Verriegelungsteils 13 sind Rollen 15 vorgesehen, welche auf gleichmäßig über den Umfang des Verriegelungsteils 13 verteilt angeordneten, radial verlaufenden Zapfen 16 im Inneren des Verriegelungsteils 13 drehbar gelagert sind und in gleichem Maße über die dem Steuerkörper 6 zugekehrte Stirnfläche des Verriegelungsteils 13 überstehen.

In den Zwischenräumen zwischen den Zapfen 16 sind von der dem Revolverkopf 1 zugekehrten Stirnseite her eindringende Sacklochbohrungen im Verriegelungsteil 13 vorgesehen, in denen je ein mittels einer vorgespannten Feder belasteter Mitnahmebolzen 17 längsverschiebbar gelagert ist. Der über das Verriegelungsteil 13 überstehende Endabschnitt dieser Mitnahmebolzen 17 ist kegelförmig ausgebildet, wobei der Kegelwinkel außerhalb des Selbsthemmungsbereiches liegt. Auf jeden der Mitnahmebolzen 17 ist eine in den Revolverkopf 1 eindringende konische Bohrung 18 ausgerichtet, deren Kegelwinkel an denjenigen des Bolzenendes angepaßt ist. Diese konischen Bohrungen 18 liegen in je einer Vertiefung, aus der die Mitnahmebolzen 17 nicht heraustreten können, wodurch der Verdrehwinkel des Revolverkopfes 1 relativ zum Verriegelungsteil 13 begrenzt ist.

Auf der dem Verriegelungsteil 13 zugewandten Stirnseite weist der Steuerkörper 6 eine Kurvenbahn auf, welche sich über den gesamten Umfang der Stirnseite erstreckt und als Laufbahn für die Rollen 15 dient. Diese Kurvenbahn besteht aus in einer Radialebene liegenden, planen Abschnitten und vertieften Abschnitten, die eine an die Krümmung der Außenmantelfläche der Rollen 15 angepaßte Krümmung haben. Liegen die Rollen 15 auf je einem der planen Abschnitte auf, dann befindet sich das Verriegelungsteil 13 in seiner Verriegelungsstellung, in welcher die Verzahnung 13' normalerweise vollständig und spielfrei in Eingriff mit den Verzahnungen 1' und 14' stehen. Greifen hingegen die Rollen 15 vollständig in die vertieften Abschnitte der Kurvenbahn ein, dann befindet sich das Verriegelungsteil 13 in seiner Freigabestellung, in welches seine Verzahnung 13' die Verzahnungen 1' und 14' vollständig freigibt.

Der Steuerkörper 6 weist an seiner auf den Außenteil 11 ausgerichteten Stirnseite axial vorspringende Klauen auf, die in je eine Nut des Außenteils 11 eingreifen. Sowohl die Klauen als auch die Nuten haben in Radialebenen liegende Flanken, so daß eine formschlüssige Kupplung vorhanden ist, wenn die Klauen an der einen oder anderen Flanke der zugeordneten Nut anliegen. Die in Umfangsrichtung gemessene Breite der Nuten ist größer als die entsprechende Breite der Klauen, und zwar um ein solches Maß, daß, ausgehend von einer Ausrichtung der Klauen auf die Mitte der zugeordneten Nut, was einer Position der Rollen 15 in der Mitte eines der planen Abschnitte entspricht, jede Klaue relativ zur Nut in der einen oder anderen Richtung so weit verschoben werden kann, daß die Rollen 15 in vollständigen Eingriff mit je einem der vertieften Abschnitte der Kurvenbahn kommen. In dieser Stellung liegt die Klaue an der einen Flanke der Nut an.

Als Ersatz für eine mechanische Bremse oder einen sonstigen Anschlag sind mehrere Zentrierbolzen 19 vorgesehen, die in je einer zur Antriebswelle 3 parallelen, von der Stirnfläche jeder Klaue aus in den Steuerkörper 6 eindringenden Bohrung längsverschiebbar gelagert sind, wobei je eine Feder die Zentrierbolzen 19 gegen den Außenteil 11 belastet. Der über die Klaue überstehende Endabschnitt des Zentrierbolzens 19 ist kegelförmig ausgebildet, wobei der Kegelwinkel außerhalb des Selbsthemmungsbereiches liegt. Ferner ist in der Mitte jeder der Nuten eine konische Bohrung vorgesehen, deren Konuswinkel an den Kegelwinkel des zugeordneten Zentrierbolzens 19 angepaßt ist, welcher in die konische Bohrung eingreift, wenn die Klaue auf die Mitte der Nut ausgerichtet ist. Die Zentrierbolzen 19 ersetzen nicht nur einen Anschlag oder eine elektromagnetische Bremse. Sie verhindern auch bei einer Relativbewegung zwischen dem Steuerkörper 6 und dem Außenteil 11 einen Überlauf über die Mittelstellung hinaus, da die Zentrierbolzen 19 und die konischen Bohrungen 18 dank ihrer kegeligen Form ausrichtend wirken.

Der Betrag, um den das Tellerfederpaket 8 in axialer Richtung zusammengedrückt werden kann, ist größer als der Weg, um den das in seiner Verriegelungsstellung stehende Verriegelungsteil 13 entgegen der Kraft des Tellerfederpaketes 8 verschoben werden muß, damit seine Verzahnung 13' außer Eingriff mit den Verzahnungen 1' und 14' kommt. Außerdem ist die Federkennlinie des Tellerfederpaketes 8 so gewählt, daß zwar das bei einem störungsfreien Betrieb des Werkzeugrevolvers auf den Revolverkopf 1 wirkende Drehmoment nicht dazu führen kann, daß infolge der Neigung der Zahnflanken der Verzahnungen 1', 13' und 14' die Verzahnung 13' aus den Verzahnungen 1' und 14' ausgerückt wird, daß aber ein solches Ausrücken erfolgt, wenn das am Revolverkopf 1 angreifende Drehmoment einen Wert erreicht bei dessen Überschreitung es zu einer Beschädigung oder Zerstörung von Teilen des Werkzeugrevolvers kommen könnte.

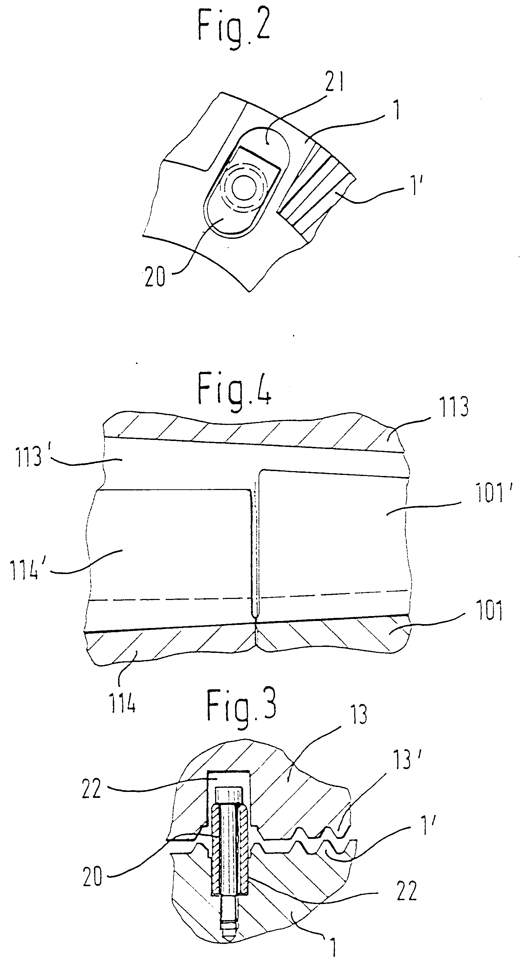

Könnte sich bei einem solchen Ausrücken der Verzahnung 13' aus den Verzahnungen 1' und 14' der Revolverkopf 1 relativ zum Verriegelungsteil 13 verdrehen, dann müßte der Revolverkopf 1 demontiert und wieder in die ursprüngliche Lage bezüglich des Verriegelungsteiles 13 gebracht werden. Über die die Verzahnung 1' tragende Stirnfläche des Revolverkopfes 1 stehen deshalb in axialer Richtung mehrere, gleichmäßig über den Umfang verteilt angeordnete Gleitsteine 20 über, die, wie die Fig. 2 und 3 zeigen, in je eine Vertiefung 21 des Revolverkopfes eingesetzt und mit diesem verschraubt sind. Der überstehende Teil der Gleitsteine 20 greift in je eine Vertiefung 22 in der die Verzahnung 13' tragenden Stirnfläche des Verriegelungsteils 13 ein. Die Eingriffstiefe der Gleitsteine 20 in die Vertiefungen 21 ist größer als die Eingriffstiefe der Verzahnung 13' in die Verzahnungen 1' und 14'. Daher bleiben die Gleitsteine 20 auch dann in Eingriff mit dem Verriegelungsteil 13, wenn dieser bei einer Kollision außer Eingriff mit den beiden Verzahnungen 1' und 14' gebracht wird. Der Revolverkopf 1 kann sich deshalb in einem solchen Falle nur relativ zum Zahnring 14 verdrehen, nicht aber auch relativ zum Verriegelungsteil 13. Um den Werkzeugrevolver wieder betriebsbereit zu machen, braucht deshalb nach einem solchen Kollisionsfall nur der Revolverkopf 1 mit Hilfe des Antriebsmotors wieder in die Ausgangsstellung gedreht zu werden, was aufgrund der Angaben des nicht dargestellten Winkelpositionsgebers ohne weiters möglich ist.

Stoßartige Drehmomentbelastungen, wie sie im normalen Betrieb auftreten, werden von dem beiden elastischen Kupplungen gedämpft. Aber auch die Mitnahmebolzen 17 und die Zentrierbolzen 19 üben eine gewisse dämpfende Wirkung aus.

Das zweite Ausführungsbeispiel unterscheidet sich von dem vorstehend beschriebenen, ersten Ausführungsbeispiel nur dadurch, daß die Sicherung gegen ein Verdrehen des Revolverkopfes relativ zum Verriegelungsteil im Falle einer ein Ausrücken des Verriegelungsteils bewirkenden Kollision nicht mit Hilfe von Gleitsteinen und diese aufnehmenden Vertiefungen realisiert ist, sondern, wie Fig. 4 zeigt, dadurch, daß die Zahnhöhe der am Revolverkopf 101 vorgesehenen Verzahnung 101' größer gewählt ist als die Zahnhöhe der Verzahnung 114' des fest mit dem Gehäuse verbundenen Zahnringes 114. In der Verriegelungsstellung des Verriegelungsteils 113 ist dessen Verzahnung 113' trotz dieses Höhenunterschiedes der Verzahnungen 101' und 114' in spielfreiem Eingriff mit diesen beiden Verzahnungen.

Wird infolge einer Kollision das Verriegelungsteil 113 entgegen der Kraft des Tellerfederpaketes ausgerückt, dann bleibt die Verzahnung 113' in Eingriff mit der Verzahnung 101', weil der Revolverkopf 101 sich drehen kann, sobald die Verzahnung 113' außer Eingriff mit der Verzahnung 114' gekommen ist. Nach einer solchen Verdrehung infolge einer Kollision braucht deshalb wie beim ersten Ausführungsbeispiel nur das Verriegelungsteil 113 mit Hilfe des Steuerkörpers in seine Verriegelungsstellung gebracht und dann der Revolver-

EP 0 343 347 B1

kopf 101 mittels des Antriebsmotors und der Angaben des Drehstellungsgebers in die ursprüngliche Lage zurückgedreht zu werden, weil sich die Lage des Revolverkopfes 101 bezüglich des Verriegelungsteils 113 nicht geändert hat.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

**Patentansprüche**

1. Werkzeugrevolver mit
a) einem Gehäuse (2),
b) einem relativ zum Gehäuse (2) mittels eines Motors drehbaren Revolverkopf (1; 101),
c) zwei koaxial zur Drehachse des Revolverkopfes (1; 101) angeordneten Zahnkränzen (1'; 14, 14'; 101'; 114, 114') von denen der eine (1'; 101') drehfest mit dem Revolverkopf (1; 101) und der andere (14, 14'; 114, 114') drehfest mit dem Gehäuse (2) verbunden ist,
d) einem relativ zum Revolverkopf (1; 101) verschiebbaren Verriegelungsteil (13; 113) mit einer auf die beiden Zahnkränze (1'; 14, 14'; 101'; 114, 114') ausgerichteten und in seiner Verriegelungsstellung mit diesen in Eingriff stehenden Verzahnung (13', 113'),
e) einer den Verriegelungsteil (13, 113) in dessen Verriegelungsstellung gegen die beiden Zahnkränze (1'; 14, 14'; 101', 114, 114') pressenden Druckfeder (8),
f) einem das Verriegelungsteil (13, 113) steuernden Steuerkörper (6), wobei
g) die axiale Verschiebbarkeit des Verriegelungsteils (13; 113) aus seiner Verriegelungsstellung heraus und die Verkürzbarkeit der Druckfeder (B), ausgehend von der in der Verriegelungsstellung des Verriegelungsteils (13, 113) vorhandenen Länge, einen das Ausrücken der Verzahnung (13', 113') des Verriegelungsteils (13, 113) aus wenigstens einem der beiden Zahnkränze (1'; 14, 14'; 101'; 114, 114') gestattenden Wert hat,
dadurch gekennzeichnet, daß
h) die Zahnflanken der Zahnkränze (1' ; 14, 14'; 101' ; 114, 114') außerhalb des Selbsthemmungsbereiches liegen
i) das Verriegelungsteil (13; 113) axial verschiebbar ist,
k) die Kraft der Drukfeder (8) bei den im störungsfreien Betrieb auftretenden Belastungen des Revolverkopfes (1; 101) größer ist als die durch diese Belastung auf das Verriegelungsteil (13, 113) im Sinne eines Ausrückens seiner Verzahnung (13', 113') wirkende Kraft und in einem Kollisionsfall mit einer die Belastbarkeit des Werkzeugrevolvers übersteigenden Beanspruchung kleiner ist als die durch diese Belastung auf das Verriegelungsteil (13, 113) im Sinne eines Ausrückens seiner Verzahnung (13', 113') wirkenden Kraft, und
l) eine das Verriegelunsteil (13; 113) in der ausgerückten Stellung, in welcher seine Verzahnung (13', 113') außer Eingriff mit dem drehfest mit dem Gehäuse (2) verbundenen Zahnkranz (14; 114) ist, mit dem Revolverkopf (1; 101) drehfest verbindende Verdrehsicherung (20, 21, 22; 101') vorgesehen ist.

2. Werkzeugrevolver nach Anspruch 1, dadurch gekennzeichnet, daß als Verdrehsicherung wenigstens ein Mitnehmerelement (20) vorgesehen ist, das sich in der Verschieberichtung des Verriegelungssteils (13) erstreckt sowie in das Verriegelungsteil (13) und/oder in den Revolverkopf (1) eingreift.

3. Werkzeugrevolver nach Anspruch 2, dadurch gekennzeichnet, daß jedes vorgesehene Mitnehmerelement ein Gleitstein (20) ist, der am Revolverkopf (1) festgelegt ist und in einem Führungskanal (22) des Verriegelungsteils (13) in der Verschieberichtung des Verriegelungsteils (13) verschiebbar geführt ist.

4. Werkzeugrevolver nach Anspruch 1, dadurch gekennzeichnet, daß die Verdrehsicherung durch die eine im Vergleich zu den Zähnen (114') des drehfest mit dem Gehäuse verbundenen Zahnkranzes (114) größere Höhe aufweisenden Zähne (101') des drehfest mit dem Revolverkopf (101) verbundenen Zahnkranzes gebildet ist.

**Claims**

1. Tool turret with
a) a housing (2),
b) a turret head (1;101) able to rotate relative to the housing (2) by means of a motor,
c) two gear rings (1';14, 14';101';114, 114') arranged coaxially to the axis of rotation of the turret head

5

(1;101), whereof one (1';101') is rigidly connected to the turret head (1;101) and the other (14, 14';114, 114') is rigidly connected to the housing (2),

d) a locking part (13;113) able to move relative to the turret head (1;101), with toothing (13', 113') aligned with the two gear rings (1';14, 14';101';114, 114') and meshing with the latter in its locking position,

e) a compression spring (8) pressing the locking part (13, 113) in its locking position against the two gear rings (1';14, 14'; 101', 114, 114'),

f) a control member (6) controlling the locking part (13, 113), in which case

g) the axial displaceability of the locking part (13;113) from its locking position and the shortening capacity of the compression spring (8), starting from the length existing in the locking position of the locking part (13, 113), has a value allowing the disengagement of the toothing (13', 113') of the locking part (13, 113) from at least one of the two gear rings (1';14, 14'; 101';114, 114'),

characterised in that

h) the tooth flanks of the gear rings (1';14, 14';101';114, 114') lie outside the self-locking range,

i) the locking part (13;113) is axially displaceable,

k) the force of the compression spring (8) at the time of loads on the turret head (1;101) occurring during trouble-free operation, is greater than the force acting due to this load on the locking part (13, 113) in the direction of a disengagement of its toothing (13',113') and in the case of a collision with a stress exceeding the load-carrying capacity of the tool turret, is less than the force acting due to this load on the locking part (13, 113) in the direction of a disengagement of its toothing (13',113'), and

l) means preventing rotation (20,21,22;101') are provided, which rigidly connect the locking part (13;113) in the disengaged position, in which its toothing (13';113') is out of engagement with the gear ring (14;114) rigidly connected to the housing (2), to the turret head (1;101).

2. Tool turret according to Claim 1, characterised in that at least one entrainment member (20) is provided as the means for preventing rotation, which member extends in the direction of displacement of the locking part (13) and engages in the locking part (13) and(or in the turret head (1).

3. Tool turret according to Claim 2, characterised in that each entrainment member provided is a slide ring (20), which is fixed to the turret head (1) and displaceably guided in a guide channel (22) of the locking part (13) in the displacement direction of the locking part (13).

4. Tool turret according to Claim 1, characterised in that the means for preventing rotation are formed by the teeth (101') of the gear ring rigidly connected to the turret head (101), which teeth have a greater height in comparison with the teeth (114') of the gear ring (114) rigidly connected to the housing.

**Revendications**

1. Tourelle porte-outils qui comprend :

a) une enveloppe (2);

b) une tourelle porte-outils (1; 101) pouvant être tournée au moyen d'un moteur;

c) deux couronnes dentées (1'; 14, 14'; 101'; 114, 114'), coaxiales à l'axe de rotation de la tourelle porte-outils, dont l'une est solidaire de la tourelle (1; 101) et dont l'autre (14, 14'; 114, 114') est solidaire de l'enveloppe (2), situées en dehors du domaine d'autoblocage;

d) un élément de verrouillage ou de blocage (14; 114) déplaçable par rapport à la tourelle (1; 101) comportant une denture (13', 113) aligné par rapport aux deux couronnes dentées (1'; 14, 14'; 101'; 114, 114') et qui, en position de verrouillage, est en prise avec celles-ci;

e) un ressort de compression (8) qui, en position de blocage de l'élément de verrouillage (13, 113), presse celui-ci contre les deux couronnes dentées (1'; 14, 14'; 101'; 114, 114');

f) un élément (6) qui commande l'élément de verrouillage (13, 113), où

g) la longueur de la course axiale de l'élément de verrouillage (13; 113) hors de sa position de verrouillage, et la possibilité de raccourcissement du ressort de compression (8), à partir de la longueur qu'il présente en position de blocage de l'élément de verrouillage (13, 113), permet le désengrènement de la denture (13', 113') de l'élément de verrouillage (13, 113) de l'une, au moins, des deux couronnes dentées (1'; 14, 14'; 101'; 114, 114'); caractérisé en ce que :

h) les flancs des dents des couronnes dentées (1'; 14, 14'; 101'; 114, 114') sont situés en dehors du domaine d'autoblocage;

i) l'élément de verrouillage (13, 113) est mobile dans le sens axial;

k) la force du ressort de compression (8), sous l'action des contraintes normales s'exercent, en dehors d'incidents de fonctionnement de la tourelle porte-outils (1; 101), est plus grande que celle s'exerçant sur l'élément de verrouillage (13, 113) dans le sens du désengrènement de sa denture (13', 113'), tandis que dans le cas d'une collision dont la violence dépasse la limite de résistance de la tourelle porte-outils, ladite force du ressort se révèle inférieure à la force tendant à désengréner sa denture (13', 113'); et

l) il est prévu un moyen de sécurité (20, 21, 22; 101') qui, dans la position désengrénée de l'élément de verrouillage (13; 113), d'avec la couronne dentée (14; 114) solidaire de l'enveloppe (2), le rend solidaire de la tourelle (1; 101).

2. Tourelle porte-outils selon la revendication 1, caractérisée en ce que ledit moyen de sécurité comporte, au moins, un élément d'entraînement (20) qui s'étend dans la direction du déplacement de l'élément de verrouillage (13) et qui s'engage dans l'élément de verrouillage (13) et/ou sous la tourelle porte-outils (1).

3. Tourelle porte-outils selon la revendication 2, caractérisée en ce que chaque élément d'entraînement est un patin (20) qui est fixé à la tourelle (1) et qui se déplace le long d'un canal de guidage (22) de l'élément de verrouillage (13), dans ladirection du mouvement de celui-ci.

4. Tourelle porte-outils selon la revendication 1, caractérisée par une sécurité anti-rotation constituée par une couronne dentée, solidaire de l'enveloppe, dont la denture (114') est plus haute que la denture (101') de la couronne dentée fixée à la tourelle porte-outils (101).

# Fig.1

# Fig.2

# Fig.4

# Fig.3